# EUROPÄISCHE PATENTSCHRIFT

(11) **EP 2 347 990 B1**
(45) Veröffentlichungstag und Bekanntmachung des Hinweises auf die Patenterteilung: **19.09.2012**
(21) Anmeldenummer: 10000650.1
(22) Anmeldetag: 22.01.2010
(51) Int. Cl.: B66F 9/12, E02F 3/36, A01B 59/00

(54) **Tragrahmen für ein oder mehrere Lastaufnahmemittel**
Support frame for one or more load bearer
Cadre porteur pour un ou plusieurs moyens de réception de charge

(43) Veröffentlichungstag der Anmeldung: 27.07.2011
(73) Patentinhaber: Vetter Umformtechnik GmbH, 57299 Burbach (DE)
(72) Erfinder: Vetter, Arnold, 57234 Wilnsdorf (DE); Scholl, Christian, 57258 Freudenberg (DE)
(74) Vertreter: Grosse, Wolf-Dietrich Rüdiger

(56) Entgegenhaltungen:
- WO-A1-91/07345
- WO-A1-98/15490
- US-A- 5 336 039

## Beschreibung

Die Erfindung betrifft einen Tragrahmen für Lastaufnahmemittel nach dem Oberbegriff des Anspruchs 1. Unter Lastaufnahmemittel werden hier beispielsweise ein Paar von Gabelzinken, Baggerschaufeln, Ballenklammern, einzelne oder paarweise angeordnete Tragdorne, Tragkörbe oder ähnliches verstanden.

Es ist bekannt, solche oder andere Lastaufnahmemittel an einem Tragrahmen auswechselbar zu halten. Ein solcher Tragrahmen ist vorteilhaft nach der Norm ISO 23206 ausgebildet und umfasst nicht nur obere und untere Verbindungsmöglichkeiten zu dem oder den ansetzbaren Lastaufnahmemittel(n), sondern kann auch selbst rückseitige Anschlussstellen insbesondere gemäß der genannten Norm aufweisen, über die er in seiner Funktionsstellung von beweglichen Armen eines Fahrzeugs gehalten sein kann, zum Beispiel von hydraulisch verschwenkbaren Armen eines Traktors oder einer anderen Landmaschine oder Baumaschine. Auch die insoweit rückseitigen Anschlussstellen, über die der Tragrahmen mit den Armen verbindbar ist und von diesen bei passender Ausbildung in einem Parallelhub ohne Verkippen angehoben oder abgesenkt und ggf. auch um eine Horizontalachse verschwenkt werden kann, sind genormt und ragen aus einer vertikalen Ebene, in der der dem zumindest einen Lastaufnahmemittel zugewandte Teil des Tragrahmens erstreckt ist, rückwärtig heraus.

Üblicherweise sind hier seitlich zwei hoch aufragende angeschweißte Sockel vorgesehen, an denen jeweils ein Satz von Lageraugen oder ähnlichen Anschlussstellen für die Tragarme ausgebildet ist. Die oberen Anschlussstellen sind dabei Norm entsprechend als nach unten offene Hakenteile, die unteren als geschlossene Lageraugen gebildet. Da die oberen Anschlussstellen nach Norm weiter außen liegen als die unteren und die unteren zudem noch weiter von der vertikalen Ebene des Tragrahmens rückversetzt sein sollten, müssen solche Sockel eine erhebliche Breite und Tiefe aufweisen, um jeweils beide Anschlussstellen einer Seite aufnehmen zu können. Damit geht eine hohe Masse einher, so dass die Tragrahmen insgesamt sehr schwer werden, was insbesondere für kleine Hydrauliken mit relativ geringer Tragkraft problematisch ist.

Derartige Sockel behindern zudem vor allem die Sicht über und durch den Tragrahmen auf das zumindest eine Lastaufnahmemittel und das damit zu transportierende Gut. Da dies üblicherweise auch die Fahrtrichtung ist, wird damit vor allem der freie Blick nach vorne behindert.

Bei nicht exakten Schweißnähten der Sockel werden zudem auch Korrosion und Spaltkorrosion begünstigt, insbesondere da der Rahmen im täglichen Umgang häufig angeschlagen wird.

Sowohl durch die WO 98/15490 A1 als auch die WO 91/07345 A1 sind Trageinrichtungen für Lastaufnahmemittel welche Querträger und Halteteile aufweisen bekannt, wie die Halteteile jedoch aufgebaut sind ist in keiner der Druckschriften offenbart.

Der Erfindung liegt die Aufgabe zugrunde, eine verbesserte Trageinrichtung der genannten Art unter Verringerung der o. g. Nachteile zu schaffen.

Die Erfindung löst dieses Problem durch eine Trageinrichtung mit den Merkmalen des Anspruchs 1. Hinsichtlich vorteilhafter Ausgestaltungen wird auf die abhängigen Ansprüche 2 bis 8 verwiesen.

Erfindungsgemäß ist eine Trageinrichtung geschaffen, die mit ihrer Einstückigkeit der Halteteile auf Sockel für die Anschlussstellen des Tragrahmens verzichten kann. Mit den einstückigen Halteteilen entfallen auch die mit breiten und hohen Sockein verbundenen Zusatzgewichte und vor allem die Sichteinschränkungen nach vorne. Ebenso ergibt sich durch den Verzicht auf Schweißnähte eine Verringerung in der Korrosionsanfälligkeit.

Erfindungsgemäß kann ein Satz von Anschlussstellen einstückig an einem jeweiligen Halteteil angeformt sein, indem dieses integral die Anschlussstellen aufnimmt. Besonders günstig können diese Halteteile in ihrer Höhe die Ebene eines oberen Querträgers des Tragrahmens unterschreiten oder auf gleicher Höhe enden, so dass die freie Sicht über den Tragrahmen davon völlig ungestört bleibt. Auch kann besonders günstig der Raum quer zwischen den schlanken Halteteilen frei bleiben und so eine deutliche Vergrößerung des Sichtfelds liefern.

Fertigungstechnisch einfach und dennoch stabil kann ein jeweiliges Halteteil als vergleichsweise leichtes Schmiedeteil ausgebildet sein.

Auch eine Ausbildung des Halteteils als Gussteil kann möglich sein.

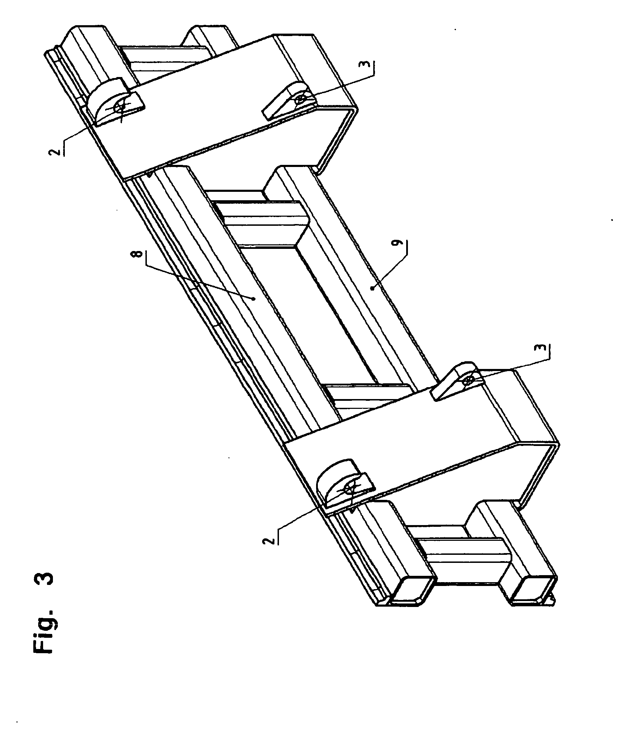

Insbesondere sind die Halteteile, die bei Ausbildung gemäß der o. g. Norm jeweils eine obere und eine untere Anschlussstelle tragen, zueinander in Querrichtung beabstandet und weisen jeweils in Querrichtung eine flache Erstreckung auf. Sie müssen dabei nicht die übliche Breite von Sockeln erreichen, die gemäß ihrer Ausbildung nach dem Stand der Technik in Figur 3 zum Vergleich dargestellt sind.

Vielmehr können erfindungsgemäß die Halteteile, um eine unterschiedliche lichte Weite zwischen den oberen Anschlussstellen einerseits und den unteren Anschlussstellen andererseits zu ermöglichen und ohne breite und schwere Sockel auszubilden, besonders vorteilhaft von einem geradlinigen, vertikalen Verlauf abweichen und einen schräg aufwärts gerichteten Verlauf mit einer horizontalen Komponente ausbilden.

Dabei ist es für die Stabilität und Gewichtsersparnis hilfreich, wenn der Tragrahmen eine Fachwerkstruktur mit zumindest einem oberen und einem unteren Querträger und diese verbindenden, schräg aufwärts laufenden Zwischensäulen ausbildet und die Verstärkungen entlang von diese hintergreifenden Zwischensäulen verlaufen, wobei zumindest zwei Zwischensäulen in der Ebene des Tragrahmens einen Schrägverlauf mit einem Anstiegswinkel von zumindest zehn Grad Neigung gegen die Vertikale aufweisen. Die Halteteile können dann über nahezu ihren gesamten Verlauf entlang diesen Zwischensäulen mit schräg aufwärts verlaufen und am oberen und unteren Querträger wieder in einen lotrechten Verlauf übergehen, so dass die Anschlussstellen jeweils vertikal stehen.

Die Halteteile selbst können dabei eine in Breitenrichtung sehr flache Ausbildung zeigen und damit noch schmaler als in dem Tragrahmen vorhandene Zwischensäulen sein, hinter denen die Halteteile verlaufen. Die Sicht auch durch den Tragrahmen ist damit optimiert.

Durch die einstückige Ausbildung der Halteteile ist auch ein guter Schutz gegen das Eindringen von Wasser erreicht.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine Ausführung eines erfindungsgemäßen Tragrahmens in perspektivischer Ansicht, von der Seite der Anschlussstellen zum Aufnehmen des Tragrahmens aus gesehen,
- Fig. 2: eine stirnseitige Seitenansicht des Tragrahmens nach Figur 1,
- Fig. 3: einen Tragrahmen gemäß dem Stand der Technik aus ähnlicher Perspektive wie in Figur 1.

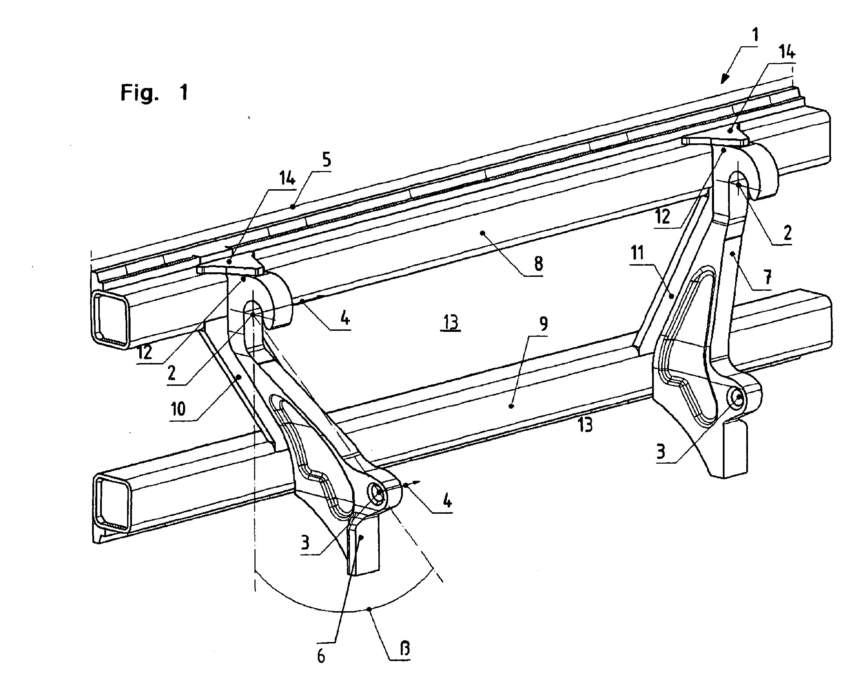

Von der Trageinrichtung ist in Figur 1 ein Tragrahmen 1 dargestellt, der zur Abstützung von verschiedenen Lastaufnahmemitteln, wie etwa ein oder mehrere Gabelzinken, Hakenteile oder Tragdorne, für eine Bagger- oder Räumschaufel, Greifzange oder dergleichen, Verwendung finden kann. Die Lastaufnahmemittel können in unterschiedlichen Positionen an dem Tragrahmen 1 eingehängt werden.

Dieser ist seinerseits an ein Fahrzeug, insbesondere eine Bau- oder Landmaschine, vor allem häufig an einen Traktor, anhängbar, wobei das Fahrzeug für die Verbindung zum Tragrahmen 1 über zumindest einen Arm verfügt (häufig - gerade beim Traktor - auch zwei Arme nebeneinander). Dieser zumindest eine Arm ist beweglich, üblicherweise über eine Hydraulik. Er greift in Funktionsstellung zum Bewegen eines Lastaufnahmemittels mit seinem freien Ende in gemäß der Norm ISO 23206 offene obere 2 und geschlossene untere Anschlussstellen 3 des Tragrahmens 1 ein und ist darüber mit diesem lösbar, aber fest verbindbar. Jedes Paar von einer oberen und einer unteren Anschlussstelle 2, 3 bildet daher hier einen Satz von Anschlussstellen 2, 3 aus.

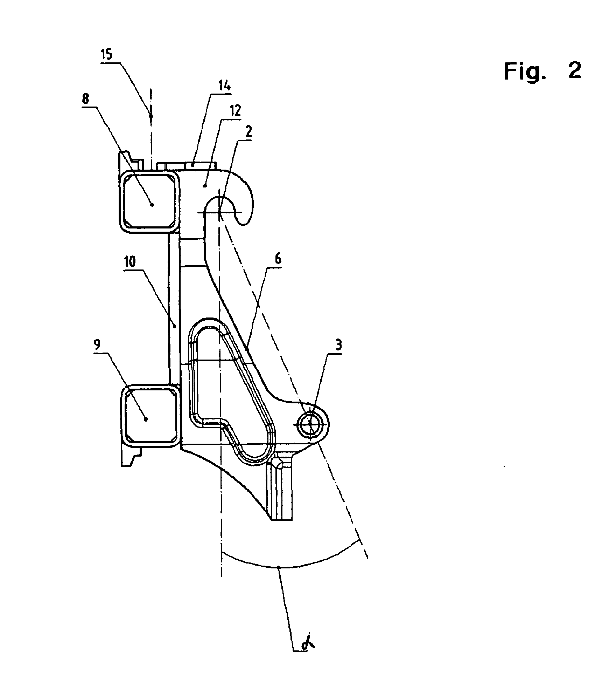

Jeweils ein solcher Satz von Anschlussstellen 2, 3 ist gemäß der Darstellung nach den Figuren 1 und 2 an einem einstückigen Halteteil 6 bzw. 7 ausgebildet. Die Halteteile 6 und 7 sind dabei zueinander bezüglich der vertikalen Fahrzeuglängsmittelebene axialsymmetrisch. Die in Querrichtung schlanken und nur wenige Zentimeter starken Halteteile 6, 7 erfordern innerhalb ihrer Struktur keine Schweißnähte, lediglich zu ihrer Verbindung mit Trägern 8, 9 und ggf. Zwischensäulen 10, 11 des Tragrahmens 1. Die Halteteile 6, 7 sind für hohe Anforderungen aus einem Eisenwerkstoff gebildet.

Insbesondere kann jeweils ein gesamtes Halteteil 6, 7 als Schmiedeteil aus einem Stahlwerkstoff oder für geringere Anforderungen aus einer Leichtmetall-Legierung ausgebildet sein.

Wie in Figur 1 erkennbar ist, sind entsprechend den Normmaßen aus der o. g. ISO 23206 obere Anschlussstellen 2 vorgesehen, die als nach unten offene Hakenteile ausgebildet sind, und untere Anschlussstellen 3, die als geschlossene Lageraugen ausgebildet sind.

Die Anschlussstellen 2, 3 sind jeweils paarweise vorgesehen und bezüglich der Quererstreckung 5 des Tragrahmens 1 zueinander beabstandet. Die oberen und die unteren Anschlussstellen 2, 3 sind jeweils so ausgerichtet, dass ein darauf errichtetes Lot 4 in horizontale Richtung zeigt. Bezüglich der Quererstreckung 5 des Tragrahmens 1 sind die unteren Anschlussstellen 3 gegenüber den oberen Anschlussstellen 2 um den Winkel β weiter einwärts versetzt, so dass die lichte Weite zwischen den beiden unteren Anschlussstellen 3 kleiner ist als die zwischen den beiden oberen Anschlussstellen 2. Zudem sind (Fig. 2) die unteren Anschlussstellen 3 gegenüber den oberen Anschlussstellen 2 auch um den Winkel α weiter von der vertikalen Ebene 15 der Träger 8, 9 und Zwischensäulen 10, 11 entfernt versetzt, so dass ein Parallelhub ohne Verkippen beim Anheben des Tragrahmens zu erreichen ist.

Um diese Geometrie zu erreichen, sind die Anschlussstellen 2, 3 zur Verbindung des Tragrahmens 1 mit dem zumindest einen fahrzeugseitigen Arm an den mit einer vertikalen Komponente aufragenden Halteteilen 6, 7 des Tragrahmens 1 integral ausgebildet. Die Halteteile 6, 7 weichen in ihrer Geometrie von einem geradlinigen Verlauf ab und weisen eine vertikale und eine horizontale Komponente auf, so dass ein bezüglich der Quererstreckung 5 schräg ansteigender Verlauf (gekröpfter Verlauf) eines jeden Halteteils 6, 7 gebildet ist.

Dabei sind die Halteteile 6, 7 und Anschlussstellen 2, 3 an einer aus Sicht des oder der Lastaufnahmemittel(s) rückseitigen Ebene des Tragrahmens 1 gelegen, wie etwa in Figur 2 erkennbar ist.

Für den Schrägverlauf der Halteteile 6, 7 weist der Tragrahmen 1 optimiert eine fachwerkartige Struktur mit zumindest einem oberen und einem unteren Querträger 8, 9 und diese verbindenden Zwischensäulen 10, 11 auf. Die Zwischensäulen 10, 11 verlaufen von unten nach oben schräg auswärts. An diesen und hinter diesen verlaufen die Halteteile 6, 7 und sind damit punktuell oder linienhaft verschweißt, so dass sie dem nach oben breiter werdenden Schrägverlauf folgen und die oberen Aufnahmen 2 bezüglich der Quererstreckung 5 weiter außen als die unteren Aufnahmen 3 liegen. Es ist jedoch auch durchaus möglich, die Halteteile 6, 7 nur mit dem zumindest einen oberen und einen unteren Querträger 8, 9 zu verschweissen, und auf die Zwischensäulen 10, 11 zu verzichten. Für eine Versteifung des Tragrahmens 1 können noch Versteifungsplatten 14 an dem Querträger 8 vorgesehen sein, mit denen die Halteteile 6, 7.verschweisst sind

Ein besonderer Vorteil der Erfindung liegt darin, dass die Halteteile 6, 7 mit ihren oberen Enden 12 die Ebene eines oberen Querträgers 8 des Tragrahmens 1 nicht überschreiten, so dass die freie Sicht nach vorne über den Tragrahmen nicht eingeschränkt wird.

Hier sind zumindest zwei - hier genau zwei - Zwischensäulen 10, 11 in der vertikalen Ebene 15 der Querträger 8, 9 und Zwischensäulen 10, 11 des Tragrahmens 1 vorgesehen, die jeweils bezüglich der Breitenerstreckung 5 einen Schrägverlauf mit einem Anstiegswinkel β von zumindest zehn Grad Neigung gegen die Vertikale aufweisen und so die unterschiedliche Breitenlage von oberen 2 und unteren Anschlussstellen 3 unterstützen.

Wenn im Tragrahmen 1 genau zwei Zwischensäulen 10; 11, oder auch keine Zwischensäulen vorgesehen sind, und der quer zwischen diesen liegende Raum 13 frei belassen ist, ist auch die Sicht durch den Tragrahmen 1 deutlich verbessert. Die in Querrichtung schlanken und ggf. dem Verlauf der Zwischensäulen 10, 11 folgenden Halteteile 6, 7 bilden somit nur eine minimale Sichteinschränkung.

Weiter kann der Tragrahmen 1 nebeneinander mehrere Nuten umfassen, so dass das oder die Lastaufnahmemittel relativ zu einer vertikalen Fahrzeuglängsmittelebene an verschiedenen Stellen ansetzbar ist und damit eine hohe Flexibilität ermöglicht.

### Bezugszeichenliste:

- 1: Tragrahmen,
- 2: obere Anschlussstelle,
- 3: untere Anschlussstelle,
- 4: Lot auf einer Aufnahmestelle,
- 5: Quererstreckung,
- 6: Halteteil,
- 7: Halteteil,
- 8: oberer Querträger,
- 9: unterer Querträger,
- 10: Zwischensäule,
- 11: Zwischensäule,
- 12: oberes Ende des Halteteils,
- 13: Raum zwischen den Säulen,
- 14: Versteifungsplatten,
- 15: Vertikalebene

## Patentansprüche

1. Trageinrichtung für zumindest ein Lastaufnahmemittel, insbesondere für ein oder mehrere Gabelzinken, Hakenteile oder Tragdorne, für eine Bagger - oder Räumschaufel, eine Greifzange, einen Tragkorb oder ähnliches, wobei die Trageinrichtung einen Tragrahmen (1) zur Abstützung des oder der Lastaufnahmemittel umfasst, der seinerseits an ein Fahrzeug, insbesondere eine Bau- oder Landmaschine, über zumindest einen fahrzeugseitigen Arm lösbar halterbar ist, wobei der Tragrahmen (1) für diese Halterung über seine Quererstreckung (5) zumindest zwei Sätze von Anschlussstellen (2;3) aufweist, wobei jeweils ein Satz von Anschlussstellen (2;3) an einem gemeinsamen, einstückigen Halteteil (6;7) ausgebildet ist **dadurch gekennzeichnet dass**, das Halteteil (6;7) als Schmiede- oder Gussteil ausgebildet ist, und wobei in montierter Stellung die Halteteile (6;7) mit einer vertikalen Komponente aufragen und dabei mit ihren oberen Enden (12) die Ebene eines oberen Querträgers (8) des Tragrahmens (1) nicht überschreiten.

2. Trageinrichtung nach Anspruch 1,
**dadurch gekennzeichnet,**
**dass** die Halteteile (6;7) zueinander in Querrichtung beabstandet sind und in Querrichtung eine flache Erstreckung aufweisen.

3. Trageinrichtung nach einem der Ansprüche 2,
**dadurch gekennzeichnet,**
**dass** die Halteteile (6;7) und Anschlussstellen (2;3) an einer aus Sicht des
oder der Lastaufnahmemittel(s) rückseitigen Ebene des Tragrahmens (1) gelegen sind.

4. Trageinrichtung nach Anspruch 3,
**dadurch gekennzeichnet,**
**dass** die Halteteile (6;7) von einem geradlinigen Verlauf abweichen und in ihrem Verlauf eine horizontale Komponente in Querrichtung (5) aufweisen.

5. Trageinrichtung nach einem der Ansprüche 1 bis 4,
**dadurch gekennzeichnet,**
**dass** der Tragrahmen (1) eine Fachwerkstruktur mit zumindest einem oberen und einem unteren Querträger (8;9) und diese verbindenden Zwischensäulen (10;11) ausbildet.

6. Trageinrichtung nach Anspruch 5,
**dadurch gekennzeichnet,**
**dass** zumindest zwei Zwischensäulen (10;11) in der Ebene des Tragrahmens einen Schrägverlauf mit einem Anstiegswinkel β von zumindest zehn Grad Neigung gegen die Vertikale nach oben außen aufweisen.

7. Trageinrichtung nach Anspruch 6,
**dadurch gekennzeichnet,**
**dass** die Halteteile (6;7) entlang von Zwischensäulen (10;11) verlaufen.

8. Trageinrichtung nach einem der Ansprüche 6 oder 7,
**dadurch gekennzeichnet,**
**dass** im Tragrahmen (1) genau zwei Zwischensäulen (10;11) vorgesehen sind und der quer zwischen diesen liegende Raum (13) frei belassen ist.

## Claims

1. A supporting device for at least one load handling means, in particular for one or a plurality of forks, hook parts, or support mandrels, for an excavator bucket or dozer blade, a gripper, a carrying basket or the like, wherein the supporting device comprises a support frame (1) for supporting the load handling means, which support frame, on its part, can be detachably held on a vehicle, in particular a construction or agricultural machine, via at least one vehicle-side arm, wherein for this holding arrangement, the support frame (1) has at least two sets of connection points (2; 3) arranged over its transverse extension (5), wherein in each case one set of connection points (2; 3) is formed on a common one-piece holding part (6; 7), **characterized in that** the holding part (6; 7) is configured as a forging or a casting, and wherein in the assembled position, the holding parts (6; 7) protrude upward with a vertical component without extending with their upper ends (12) beyond the plane of an upper cross beam (8) of the support frame (1).

2. The supporting device according to claim 1,
**characterized in**
**that** the holding parts (6; 7) are spaced apart from each other in the transverse direction and have a flat extension in the transverse direction.

3. The supporting device according to claim 1 or claim 2,
**characterized in**
**that** viewed from the load handling means, the holding parts (6; 7) and connection points (2; 3) are located on a plane on the rear side of the support frame (1).

4. The supporting device according to claim 3,
**characterized in**
**that** the holding parts (6; 7) deviate from a straight course and have in its course a horizontal component in the transverse direction (5).

5. The supporting device according to any one of the claims 1 to 4,
**characterized in**
**that** the support frame (1) forms a framework comprising at least one upper and one lower cross beam (8; 9) and intermediate columns (10; 11) connecting said beams.

6. The supporting device according to claim 5,
**characterized in**
**that** at least two intermediate columns (10; 11) in the plane of the support frame have an oblique course with an angle of gradient β of at least ten degrees inclination upward with respect to the vertical.

7. The supporting device according to claim 6,
**characterized in**
**that** the holding parts (6; 7) run along intermediate columns (10; 11).

8. The supporting device according to claim 6 or claim 7,
**characterized in**
**that** exactly two intermediate columns (10; 11) are provided in the support frame (1), and the space (13) extending transversely between said columns remains free.

## Revendications

1. Système porteur pour au moins un moyen de réception de charge, en particulier pour une ou plusieurs dents de fourche, des parties de crochet ou des mandrins porteurs, pour une pelle d'excavateur ou de déblayage, une pince de préhension, un panier porteur ou similaire, le système porteur comprenant un cadre porteur (1) pour le soutien du ou des moyens de réception de charge, lequel peut être maintenu pour sa part de façon amovible sur un véhicule, au moins en particulier un engin de chantier ou une machine agricole, au moyen d'au moins un bras côté véhicule, le cadre porteur (1) présentant pour ce support au moyen de son extension transversale (5) au moins deux ensembles de parties de raccordement (2 ; 3), à chaque fois un ensemble de points de raccordement (2 ; 3) étant réalisé sur une partie de retenue (6 ; 7) commun et d'un seul tenant, **caractérisé en ce que** la partie de retenue (6 ; 7) est conçue comme partie forgée ou moulée, et les parties de retenue (6 ; 7) dépassant avec une composante verticale dans la position montée et ne dépassant pas avec leurs extrémités (12) supérieures le plan d'une traverse (8) supérieure du cadre porteur (1).

2. Système porteur selon la revendication 1,
**caractérisé en ce que**
les parties de retenue (6 ; 7) sont espacées les unes des autres dans le sens transversal et présentent une extension plate dans le sens transversal.

3. Système porteur selon l'une des revendications 2,
**caractérisé en ce que**
les parties de retenue (6 ; 7) et points de branchement (2 ; 3) sont placés sur un plan, côté arrière du point de vue du ou des moyens de réception de charge, du cadre porteur (1).

4. Système porteur selon la revendication 3,
**caractérisé en ce que**
les parties de retenue (6 ; 7) s'écartent d'un tracé rectiligne et présentent dans leur tracé une composante horizontale dans le sens transversal (5).

5. Système porteur selon l'une des revendications 1 à 4,
**caractérisé en ce que**
un cadre porteur (1) présente une structure de treillis avec au moins une traverse supérieure et une traverse inférieure (8 ; 9) et réalise ces colonnes intermédiaires (10 ; 11) de liaison.

6. Système porteur selon la revendication 5,
**caractérisé en ce**
**qu'**au moins deux colonnes intermédiaires (10 ; 11) présentent dans le plan du cadre porteur un tracé oblique avec un angle de montée β d'au moins dix degrés d'inclinaison par rapport à la verticale vers le haut à l'extérieur.

7. Système porteur selon la revendication 6,
**caractérisé en ce que**
les parties de retenue (6 ; 7) sont agencées le long de colonnes intermédiaires (10 ; 11).

8. Système porteur selon l'une des revendications 6 ou 7,
**caractérisé en ce que**
exactement deux colonnes intermédiaires (10 ; 11) sont prévues dans le cadre porteur (1) et l'espace (13) situé transversalement entre ces colonnes est laissé libre.
